(19) Europäisches Patentamt
European Patent Office
Office européen des brevets

(11) **EP 2 479 064 B1**

(12) **FASCICULE DE BREVET EUROPEEN**

(45) Date de publication et mention de la délivrance du brevet:
**03.06.2020 Bulletin 2020/23**

(51) Int Cl.:
***B60Q 1/14*** *(2006.01)*

(21) Numéro de dépôt: **12151861.7**

(22) Date de dépôt: **20.01.2012**

(54) **Procédé et dispositif de contrôle d'un faisceau lumineux émis par un véhicule, notamment automobile**

Verfahren und Vorrichtung zur Kontrolle eines Lichtbündels, das von einem Fahrzeug, insbesondere einem Auto, ausgesandt wird

Method and device for controlling a light beam emitted by a vehicle, in particular an automobile

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2011 FR 1150492**

(43) Date de publication de la demande:
**25.07.2012 Bulletin 2012/30**

(73) Titulaire: **Valeo Vision**
**93012 Bobigny (FR)**

(72) Inventeurs:
• **Sanchez, Vanesa**
**75011 PARIS (FR)**
• **Reiss, Benoît**
**95580 MARGENCY (FR)**
• **Zydek, Bastian**
**65812 Bad Soden (DE)**

(56) Documents cités:
**EP-A1- 2 275 305    EP-A2- 0 869 031**

**Description**

La présente invention concerne un procédé et un dispositif de contrôle d'un faisceau lumineux émis par un véhicule, notamment automobile.

Il est connu de longue date de pouvoir choisir, grâce à des commandes manuelles au volant, de circuler soit en feux de croisement (low beam en anglais), soit en feux de route (high beam en anglais). Les premiers permettent d'éviter d'éblouir les occupants des autres véhicules mais ne donnent pas une visibilité satisfaisante tandis que les seconds permettent d'éclairer une large zone à l'avant du véhicule mais éblouissent les occupants des véhicules circulant devant (par l'intermédiaire des rétroviseurs) ou venant en sens inverse.

Par ailleurs, changer de mode d'éclairage (feux de croisement / feux de route) est fastidieux. Certains conducteurs peuvent se laisser distraire ou mal juger du moment opportun pour le changement de mode ce qui conduit à retarder ou anticiper celui-ci et nuit à la visibilité.

Pour éviter ces inconvénients, il a déjà été proposé, par exemple dans les documents EP 2 275 305 et EP 0 869 031, des systèmes de contrôle des faisceaux lumineux permettant de disposer de faisceaux au contour adaptatif. Plus exactement, ces systèmes prévoient de détecter un usager de la route, susceptible d'être ébloui par un faisceau de feux de route, et coupent le faisceau de façon à ce que la zone occupée par l'usager de la route ne soit pas éclairée.

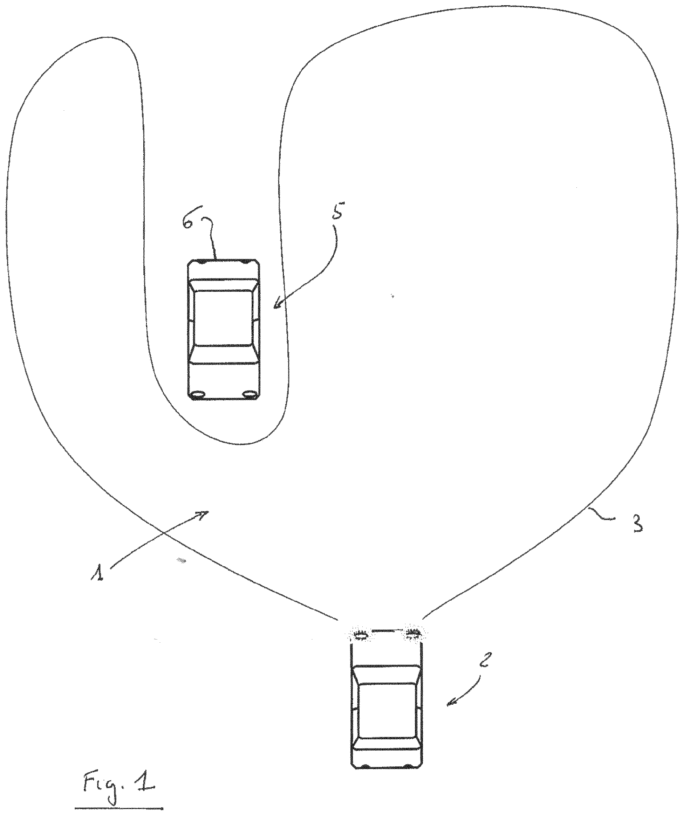

Comme illustré à la figure 1, le faisceau 1 du véhicule 2 présente ainsi un contour 3, grâce auquel l'ensemble de la route 4 est éclairée, sauf une zone 5 dans laquelle se trouve un usager 6 de la route, ici un véhicule venant en sens inverse. Le conducteur du véhicule 2 bénéficie ainsi d'une visibilité améliorée par rapport à un mode de fonctionnement en feux de croisement, sans toutefois éblouir les occupants de l'autre véhicule.

De plus, la détection des usagers de la route susceptibles d'être éblouis et l'adaptation du contour du faisceau étant assurées par des moyens automatisés, il n'est pas nécessaire que le conducteur du véhicule intervienne, ce qui lui permet de se concentrer sur sa conduite.

Cependant, il a été constaté que ces systèmes présentent encore certains inconvénients. Tout d'abord, par exemple, les bords verticaux de la zone 5 non éclairée peuvent s'avérer excessivement nets et contrastés, ce qui peut être gênant vis-à-vis de l'attention du conducteur lorsque ces bords sont projetés sur des obstacles de la route. Un autre inconvénient, c'est le déplacement de zones lumineuses intenses du faisceau au sol dans la direction d'objets à ne pas éblouir. Ceci est également gênant à l'encontre de l'attention du conducteur. De plus, les systèmes à faisceau adaptif connus souffrent d'un manque d'intensité lumineuse dans l'axe du véhicule, même si cette zone n'est occupée par aucun autre usager de la route, alors qu'il s'agit d'une des zones les plus critiques. En effet, il est possible que les zones de luminosité intense du faisceau, qui potentiellement créent la portée du faisceau, se déplacent vers les autres usagers de la route, au lieu d'éclairer dans l'axe du véhicule.

L'invention se propose de pallier ces inconvénients et concerne à cette fin un procédé de contrôle d'un faisceau lumineux émis par un véhicule, notamment automobile, tel que défini dans la revendication 1.

On peut de la sorte optimiser l'éclairage offert par le faisceau en évitant la création de zones sombres sans toutefois éblouir les usagers de la route croisant ou circulant devant le véhicule équipé. On a aussi constaté que l'on pouvait obtenir un meilleur éclairage de la zone se situant dans l'axe du véhicule équipé.

Les paramètres de la zone cible sont la nature desdits usagers, la localisation et/ou la trajectoire desdits usagers.

Selon un mode particulier de réalisation, on prévoit des formules de calcul dudit seuil d'éblouissement en fonction de la localisation desdits usagers, chaque formule correspondant à des natures et des trajectoires données desdits usagers.

On pourra alors établir ledit seuil d'éblouissement selon les étapes successives suivantes :

- on détermine la nature desdits usagers, et/ou
- on détermine la trajectoire desdits usagers, et/ou
- on applique la formule de calcul correspondant à la nature et/ou la trajectoire déterminée.

On simplifie de la sorte le calcul du seuil d'éblouissement et on minimise la sollicitation des moyens de traitement du véhicule.

Selon l'invention, on adapte la quantité de lumière du faisceau émise en direction de la zone cible en utilisant la quantité de lumière consigne.

Pour cela, on utilise en tant que quantité de lumière consigne, par exemple, une valeur calculée de luminance.

Selon l'invention, on applique une quantité de lumière nominale, supérieure à une quantité de lumière éblouissante, sur l'ensemble du faisceau sauf dans ladite zone cible.

On pourra ainsi combiner une première composante de faisceau présentant une quantité de lumière nominale sur l'ensemble du faisceau sauf dans ladite zone cible et une quantité de lumière sensiblement nulle dans ladite zone cible et une seconde composante de faisceau présentant la quantité de lumière consigne sur l'ensemble du faisceau.

Une telle solution présente l'avantage de pouvoir utiliser les systèmes adaptifs connus évoqués plus haut en ayant simplement à leur ajouter une composante supplémentaire, sans que celle-ci soit particulièrement sophistiquée car elle n'aura pas besoin d'être dirigée vers la zone cible.

Selon un mode de réalisation particulier, la quantité de lumière à appliquer dans ladite zone cible est modulée pour être perçue de façon constante par lesdits usagers de la route, ce qui rend la solution conforme à l'invention avantageuse non seulement pour le conducteur du véhicule équipé mais aussi pour lesdits usagers de la route.

L'invention concerne encore un dispositif de contrôle d'un faisceau lumineux émis par un véhicule, notamment automobile, comprenant les caractéristiques de la revendication 5.

Les moyens pour déterminer les paramètres de la zone cible comprennent, par exemple, au moins une caméra et des premiers moyens de traitement d'informations relevées par la ou lesdites caméras.

Lesdits premiers moyens de traitement sont prévus aptes à prendre en compte, notamment, la nature desdits usagers, la localisation et/ou la trajectoire desdits usagers.

Pour cela, lesdits moyens pour établir la quantité de lumière consigne comprennent des seconds moyens de traitement aptes à :

- utiliser des formules de calcul dudit seuil d'éblouissement en fonction de la localisation desdits usagers, chaque formule correspondant à des natures et des trajectoires données desdits usagers, et/ou
- établir ledit seuil d'éblouissement selon les étapes successives suivantes :

    - détermination de la nature desdits usagers, et/ou
    - détermination de la trajectoire desdits usagers, et/ou
    - utilisation de la formule de calcul correspondant à la nature et/ou la trajectoire déterminée.

La quantité de lumière consigne correspond à une valeur de l'éclairement (unité Lux) ou à une valeur en intensité (Unité candela).

Ces derniers comprennent, notamment, des combinaisons d'optiques, aptes, par exemple, à appliquer une quantité de lumière nominale sur l'ensemble du faisceau sauf dans ladite zone cible, notamment grâce à des moyens permettant de combiner une première composante de faisceau présentant la quantité de lumière nominale sur l'ensemble du faisceau sauf dans ladite zone cible et une quantité de lumière nulle dans ladite zone cible et une seconde composante de faisceau présentant la quantité de lumière consigne sur l'ensemble du faisceau.

L'invention sera mieux comprise à la lumière de la description suivante qui n'est donnée qu'à titre indicatif et qui n'a pas pour but de la limiter, accompagnée des dessins joints parmi lesquels :

- la figure 1, déjà commentée, illustre de façon schématique, en vue de dessus, un faisceau obtenu par un procédé de contrôle selon l'état de l'art,
- la figure 2 illustre de façon schématique, en vue de dessus, un exemple de faisceau obtenu selon le procédé de contrôle conforme à l'invention,
- la figure 3 illustre de façon schématique, en vue de dessus, un exemple de paramètres identifiant une zone cible, pour un véhicule venant en sens inverse,
- la figure 4 illustre de façon schématique, en vue de dessus, un exemple de paramètres identifiant une zone cible, pour un véhicule circulant devant,
- la figure 5 représente un ensemble de courbes donnant un exemple de l'allure de la quantité de lumière en fonction de la distance et de l'angle entre la source lumineuse et la zone cible, dans le cas d'un véhicule venant en sens inverse,
- la figure 6 illustre l'allure de l'intensité lumineuse à l'avant du véhicule équipé, pour différentes valeurs d'angle, selon un procédé de contrôle conforme à l'état de l'art et selon un procédé conforme à l'invention, dans le cas d'un véhicule venant en sens inverse,
- la figure 7 illustre l'allure de l'intensité lumineuse à l'avant du véhicule équipé, pour différentes valeurs d'angle, selon un procédé de contrôle conforme à l'état de l'art et selon un procédé conforme à l'invention, dans le cas d'un véhicule circulant devant.

L'invention concerne tout d'abord un procédé de contrôle d'un faisceau lumineux émis par un véhicule, notamment automobile.

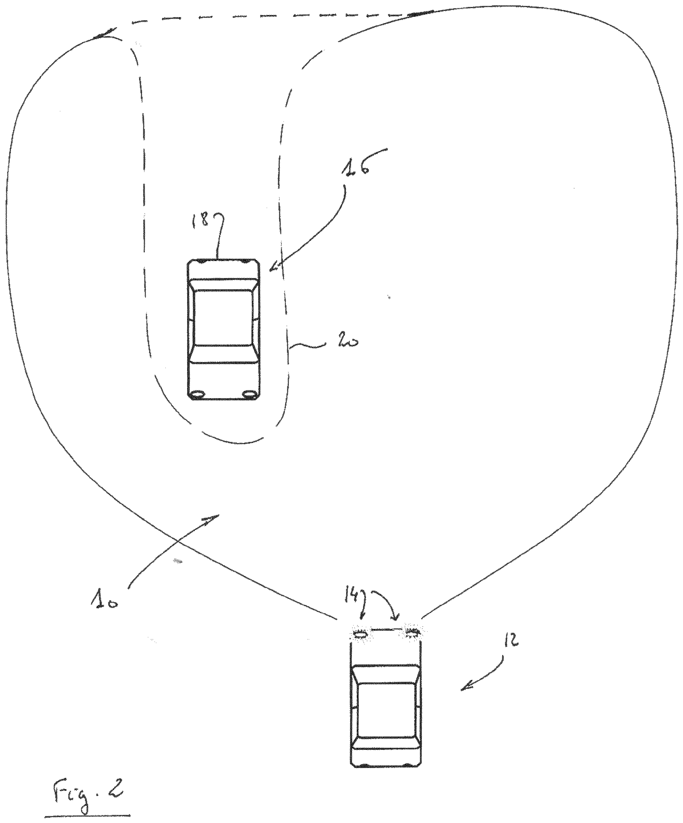

Comme illustré à la figure 2, selon le procédé conforme à l'invention, on contrôle le faisceau 10 d'un véhicule 12 équipé, par exemple, de deux optiques 14 générant ledit faisceau.

Selon l'invention on détermine des paramètres d'une zone 16, dite cible, occupée par des usagers de la route susceptibles d'être éblouis par le faisceau 10, ici un véhicule 18 venant en sens inverse.

Un premier paramètre de la zone cible est, par exemple, sa nature. Il pourra s'agir, comme dans l'exemple illustré, d'un véhicule automobile ou encore d'un véhicule utilitaire, d'un poids lourds, d'un deux roues ou même d'un piéton marchant sur ou à proximité de la chaussée.

Un autre paramètre de la zone cible pourra être, par exemple, la trajectoire desdits usagers, à savoir une trajectoire venant dans le sens inverse à celui du véhicule dont on contrôle le faisceau lumineux (cas de véhicules se croisant) ou une trajectoire allant dans le même sens que celui du véhicule dont on contrôle le faisceau lumineux (cas d'un véhicule circulant devant).

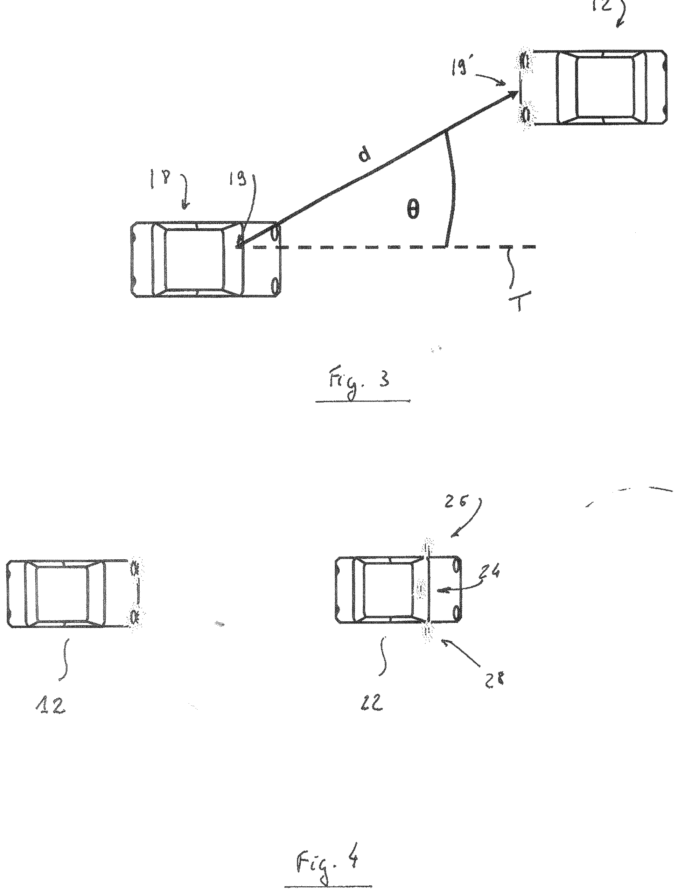

Comme illustré aux figures 3 et 4, un paramètre de la zone cible pourra aussi être, par exemple, la localisation desdits usagers, en particulier par rapport au véhicule équipé.

A la figure 3, on a illustré à ce sujet le cas de véhicule se croisant. Une première valeur employée pour caractériser la localisation du véhicule 18 venant en sens inverse de celui 12 qui émet le faisceau à contrôler est, par exemple, la distance d séparant les deux véhicules, mesurée entre une position moyenne 19 de la tête du conducteur du véhicule 18 susceptible d'être ébloui et l'avant 19' du véhicule 12 qui émet le faisceau à contrôler, entre ses deux optiques 14. Une seconde valeur employée est l'angle θ existant entre la trajectoire T du véhicule 16 venant en sens inverse et la droite le long de laquelle est mesurée la distance d.

Un contour 20 de la zone cible, illustré en pointillé à la figure 2, pourra être déduit de ces différents paramètres, notamment en tenant compte d'une fourchette d'angle autour de l'angle θ, de l'ordre de quelques degrés lorsque le véhicule 18 venant en sens inverse est éloigné à près de 90° lorsque le véhicule 18 venant en sens inverse est sur le point de croiser le véhicule 12 dont on contrôle le faisceau. Selon certaines normes, elle est fixée de façon à ce qu'une largeur de la zone cible soit d'environ 2,50 m de part et d'autre de l'axe longitudinal du véhicule 18 venant en sens inverse. Dans cette configuration, on comprend que θ varie avec la distance d séparant les deux véhicules.

Comme illustré à la figure 4, dans le cas d'un véhicule 22 circulant devant, la zone cible vise le ou les miroirs dudit véhicule 22, ici le miroir central 24, le miroir côté conducteur 26 et le miroir côté passager 28. Une valeur caractérisant le paramètre de positionnement de la zone cible est, par exemple, la distance entre les deux véhicule 12, 22 et/ou les angles formés entre ces miroirs 24, 26, 28 et l'axe longitudinal du véhicule 12 dont on contrôle le faisceau.

Un contour de la zone cible pourra être déduit de ces différents paramètres, notamment en tenant compte d'une fourchette d'angle autour de l'axe longitudinal du véhicule, de l'ordre de quelques degrés lorsque le véhicule 22 circulant devant est éloigné à près de 180° lorsque le véhicule circulant devant est proche du véhicule 12 dont on contrôle faisceau. Selon certaines normes, elle est fixée de façon à ce qu'une largeur de la zone cible soit d'environ 3,10 m de part et d'autre de l'axe longitudinal du véhicule 22 circulant devant. Dans cette configuration, on comprend que la valeur des angles θ ne varient pas ou peu avec la distance séparant les deux véhicules.

Selon l'invention, on établit une quantité de lumière, dite quantité de lumière consigne, à émettre en direction de la zone cible 16 en fonction desdits paramètres, de façon à maintenir ladite zone cible éclairée.

On peut de la sorte choisir la quantité de lumière à appliquer à ladite zone cible selon les différentes contraintes imposées. Comme cela sera illustré plus loin, on augmentera corrélativement la quantité de lumière dans l'axe du véhicule 12.

Selon un mode de mise en œuvre du procédé conforme à l'invention, on établit une quantité de lumière, dit seuil d'éblouissement, entrainant un éblouissement des passagers dans ladite zone cible, en fonction desdits paramètres.

Différentes méthodes sont applicables en ce sens, par exemple se basant sur des équations donnant les effets physiologiques et/ou psychologiques provoqués par l'éblouissement. Il pourra s'agir par exemple de la relation bien connue de Schmidt-Clausen et Bindels.

Cette relation donne la valeur d'une grandeur adimensionnelle W, appelé valeur de deBoer, représentative des effets d'une quantité de lumière perçue par une personne, selon l'équation suivante :

$$W = 5 - 2 \cdot \log_{10}\left( \frac{E_{eye}}{0.003 \cdot \left(1 + \sqrt{\dfrac{L_{adapt}}{0.04}}\right) \cdot (60 \cdot \theta)^{0.46}} \right)$$

Dans cette équation E est une grandeur donnant une image de la quantité de lumière émise, à savoir l'éclairement lumineux mesuré à une distance donnée (mesuré en lux), L la luminance d'adaptation (mesurée en candela par mètre carré) et θ l'angle (mesuré en degré) en cause, comme expliqué plus haut.

Pour le calcul du seuil d'éblouissement, on pourra choisir une valeur de deBoer de l'ordre de 3 à 5, par exemple de 3,8, ceci pour une valeur donnée de luminance d'adaptation. En l'occurrence, dans une ambiance nocturne, une luminance d'adaptation pertinente dans ce contexte pourra être de l'ordre de 0.1 cd/m$^2$. On dispose ainsi d'une valeur seuil de l'éclairement lumineux E en fonction de l'angle θ.

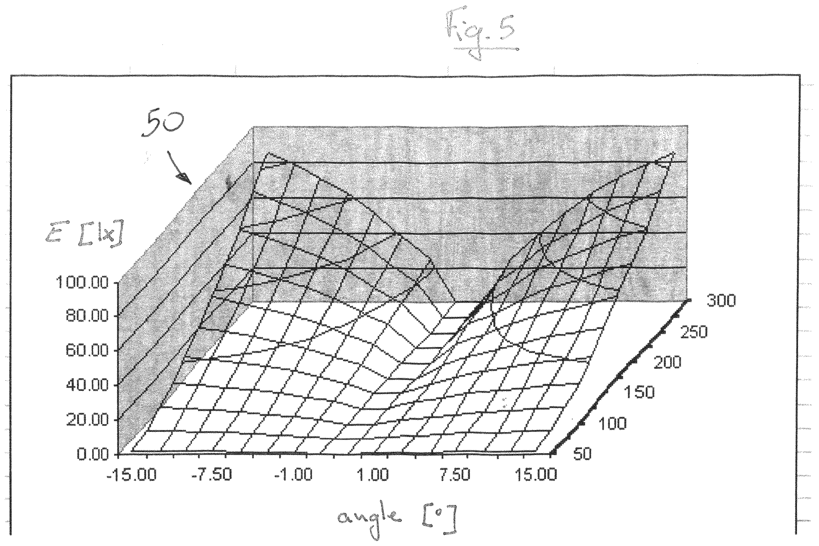

La figure 5 donne un exemple de courbes 50 donnant le seuil d'éblouissement, établi sous la forme d'un éclairement lumineux E (en lux), maximum pour une valeur donnée de l'angle θ et de la distance entre la zone cible et la source lumineuse, obtenu à partir de la formule donnée plus haut. Un seuil d'éblouissement établi sous la forme d'une intensité lumineuse (en candela) pourrait aussi être utilisé. Dans chaque cas, la valeur du seuil d'éblouissement, c'est-à-dire de la quantité de maximum de lumière pouvant être émise en évitant l'éblouissement augmente, d'une part, avec la distance entre la source et la zone cible et, d'autre part, avec l'angle θ.

D'autres équations déterminant l'apparition de conditions éblouissantes en fonction des paramètres de la zone cible peuvent bien sûr être utilisées telles que l'équation de Holladay.

Selon un mode de mise en œuvre de l'invention, on prévoit des formules de calcul du seuil d'éblouissement en fonction de la localisation desdits usagers, chaque formule correspondant à des natures et des trajectoires données desdits usagers. Dans l'exemple évoqué plus haut, c'est ainsi la nature de l'angle θ injecté dans l'équation qui est adapté à chaque cas de figures (angle θ variable pour un véhicule venant en sens inverse ou constant pour un véhicule circulant devant).

On pourra ainsi établir ledit seuil d'éblouissement selon les étapes successives suivantes :

- on détermine la nature desdits usagers,
- on détermine la trajectoire desdits usagers, puis
- on applique la formule de calcul correspondant à la nature et la trajectoire déterminée.

On fixe la quantité de lumière consigne, par exemple, à une valeur inférieure ou égale audit seuil d'éblouissement. On s'assure ainsi de l'utilisation d'une valeur permettant d'éviter de gêner les usagers de la route croisée ou venant devant le véhicule équipé, tout en assurant un éclairage optimum et respectant la réglementation.

Selon un aspect de l'invention, on adapte la quantité de lumière du faisceau émise en direction de la zone cible en utilisant la quantité de lumière consigne. On évite ainsi d'éblouir les usagers de la route se trouvant à proximité en évitant la création de zones sombres. On assure en outre une bonne visibilité, en particulier dans l'axe du véhicule.

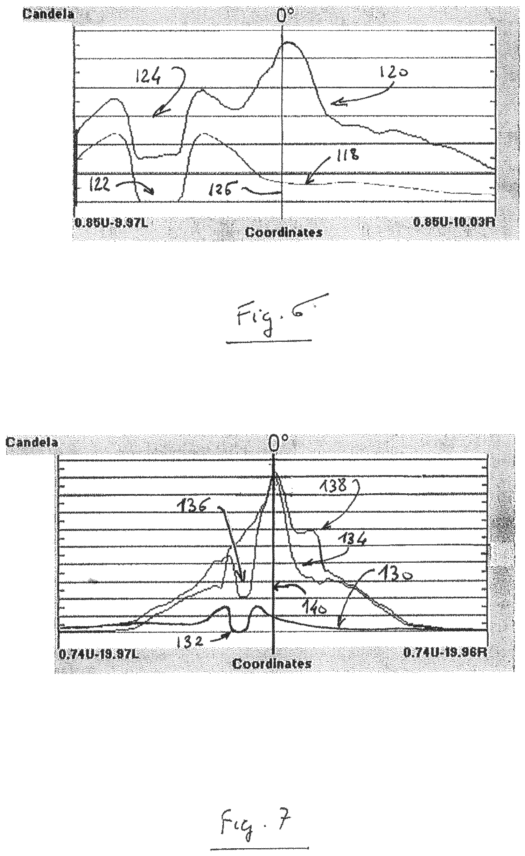

Ceci est particulièrement illustré à la figure 6 où les courbes 118, 120 donnent la valeur de l'intensité lumineuse en fonction de l'angle θ, pour le cas de figure d'un croisement de véhicule. La courbe 118 donne l'intensité lumineuse obtenue avec le procédé de l'état de l'art selon lequel la zone cible n'est pas éclairée. On voit en 122 la partie de la courbe correspondant à la direction de ladite zone cible. La courbe 120 donne l'intensité lumineuse obtenue avec un exemple de mise en œuvre du procédé conforme à l'invention. On voit en 124 la partie de la courbe correspondant à la direction de la zone cible.

Ainsi, selon l'invention, la valeur de l'intensité lumineuse est supérieure dans la partie 124 de la courbe 120 à celle dans la zone 122 de la courbe 118. En outre, on constate que l'intensité lumineuse est bien supérieure dans l'axe du véhicule, c'est-à-dire, au niveau de l'axe 126.

La figure 7 illustre le cas de figure d'un véhicule circulant devant. La courbe 130 donne l'intensité lumineuse obtenue avec le procédé de l'état de l'art selon lequel la zone cible n'est pas éclairée. On voit en 132 la partie de la courbe correspondant à la direction de ladite zone cible. La courbe 134 donne l'intensité lumineuse obtenue avec un exemple de mise en œuvre du procédé conforme à l'invention. On voit en 136 la partie de la courbe correspondant à la direction de la zone cible. On a de plus illustré l'intensité lumineuse en plein phare selon la courbe 138.

Ainsi, selon l'invention, la valeur de l'intensité lumineuse est supérieure dans la partie 136 de la courbe 134 à celle dans la zone 132 de la courbe 130. En outre, on constate que l'intensité lumineuse est bien supérieure dans l'axe du véhicule, c'est-à-dire, au niveau de l'axe 140. Elle est même quasiment identique à celle obtenue en plein phare.

La quantité de lumière consigne correspond de préférence à une valeur de l'éclairement (unité Lux) ou à une valeur en intensité (Unité candela).

Pour améliorer les temps de réaction, on pourra prévoir un processus de paramétrage. Autrement dit, on calcule de façon préalable les valeurs de quantité de lumière consigne correspondant aux différents paramètres des localisations possibles de la zone cible et on stocke les valeurs calculées dans une mémoire. En fonctionnement, on sélectionne alors dans la mémoire la quantité de lumière consigne correspondant aux paramètres relevés. On complète de la sorte l'automatisation de ce processus.

Le processus de paramétrage pourra être réalisé en prenant en compte des facteurs supplémentaires comme l'atténuation moyenne procurée par les pare-brises ou les vitres du véhicule se trouvant dans la zone cible.

Dans le cas de l'utilisation de la formule indiquée plus haut, il pourra encore permettre de fixer la valeur de deBoer et/ou la luminance d'adaptation choisie.

Le processus de paramétrage pourra aussi être simplifié en calculant les valeurs de quantité de lumière consigne pour un nombre limité de localisation de la zone cible. On déduit alors les autres valeurs par interpolation et extrapolation. On effectuera une telle approche, par exemple, en séparant le cas de figure d'un véhicule venant en sens inverse du cas de figure du véhicule circulant devant.

Différentes stratégies sont possibles pour appliquer la quantité de lumière consigne à la zone cible. Certaines sont développées dans la suite.

Selon l'invention, on applique une quantité de lumière supérieure au seuil d'éblouissement sur l'ensemble du faisceau sauf dans ladite zone cible.

Pour cela, on combine, par exemple, une première composante de faisceau présentant une quantité de lumière nominale, par exemple la quantité de lumière d'un faisceau en plein phare, sur l'ensemble du faisceau sauf dans ladite zone cible et une quantité de lumière sensiblement nulle dans ladite zone cible. Par sensiblement nulle, on entend nulle aux phénomènes de lumières parasites et/ou résiduelles près. Il pourra s'agir d'une composante de faisceau obtenue par un procédé de l'état de l'art produisant une zone cible non éclairée. Et on ajoute à cette première une seconde composante de faisceau présentant la quantité de lumière consigne sur l'ensemble du faisceau.

Ces composantes de faisceau sont déterminées, par exemple, par des caractéristiques telles que la nature et/ou la distribution des sources lumineuses utilisées, le positionnement d'écran obturant et/ou de dispositif déviant plus ou moins les faisceaux émis par lesdites sources lumineuses employées ou autres.

Dans le cas, comme évoqué plus haut, de l'utilisation d'un processus de paramétrage, on pourra stocker la quantité de lumière consigne correspondant aux paramètres de la zone cible dans la mémoire employée sous la forme des caractéristiques des différentes composantes de faisceau permettant d'obtenir cette quantité de lumière.

Lors du processus de paramétrage, les étapes d'interpolation et d'extrapolation pourront d'ailleurs servir à déterminer les caractéristiques desdites composantes de faisceau. Autrement dit, on calcule, par exemple en employant la formule donnée plus haut, la quantité de lumière à appliquer dans une zone cible et on détermine les caractéristiques des différentes composantes de faisceau permettant d'arriver à ce résultat, ceci pour une série de zone cibles données, puis on détermine ces caractéristiques pour les autres zones cibles par extrapolation et/ou interpolation.

En fonctionnement, on active alors les caractéristiques des composantes de faisceau préalablement mémorisées, en fonction des paramètres relevés pour la zone cible.

Selon un aspect de l'invention, on module la quantité de lumière à appliquer dans ladite zone cible pour qu'elle soit perçue de façon sensiblement constante par lesdits usagers de la route. Une telle fonctionnalité pourra bien sûr être prise en compte dans le paramétrage. Ainsi les informations mémorisées, par exemple les caractéristiques des composantes de faisceau, sont déterminées pour permettre l'application d'une quantité de lumière qui sera perçue comme étant constante par les usagers de la route se trouvant dans la zone cible, ceci quelle que soit leur position par rapport au véhicule équipé. Lors d'un croisement par exemple, les occupants du véhicule croisant le véhicule équipé auront ainsi la sensation d'un faisceau ayant toujours la même intensité au fur et à mesure du rapprochement des deux véhicules.

L'invention concerne encore un dispositif de contrôle d'un faisceau lumineux émis par un véhicule, notamment automobile.

Ledit dispositif comprend des moyens pour déterminer des paramètres d'une zone, dite cible, occupée par des usagers de la route susceptibles d'être éblouis par le faisceau. Ces derniers comprennent, par exemple une ou des caméras et des premiers moyens de traitement d'informations relevées par la ou lesdites caméras. Lesdits premiers moyens de traitement permettent, par exemple, la détermination d'un contour 20 de la zone cible, comme évoqué plus haut. Ils sont prévus, notamment, au niveau d'un calculateur de bord du véhicule.

Lesdits premiers moyens de traitement sont prévus aptes à prendre en compte, notamment, la nature desdits usagers, la localisation et/ou la trajectoire desdits usagers.

Selon l'invention, le dispositif comprend également des moyens pour établir une quantité de lumière, dite quantité de lumière consigne, à émettre en direction de la zone cible en fonction desdits paramètres, de façon à maintenir ladite zone cible éclairée.

Selon l'invention, lesdits moyens pour établir la quantité de lumière consigne sont prévus pour établir une quantité de lumière, dit seuil d'éblouissement, entrainant un éblouissement des passagers dans ladite zone cible, en fonction desdits paramètres, et pour fixer la quantité de lumière consigne à une valeur inférieure ou égale audit seuil.

Pour cela, lesdits moyens pour établir la quantité de lumière consigne comprennent, par exemple, des seconds moyens de traitement aptes à :

- utiliser des formules de calcul dudit seuil d'éblouissement en fonction de la localisation desdits usagers, chaque formule correspondant à des natures et des trajectoires données desdits usagers, et/ou
- établir ledit seuil d'éblouissement selon les étapes successives suivantes :

  - détermination de la nature desdits usagers, et/ou
  - détermination de la trajectoire desdits usagers, et/ou
  - utilisation de la formule de calcul correspondant à la nature et/ou la trajectoire déterminée.

Lesdits seconds moyens de traitement sont prévus, par exemple, au niveau du contrôleur de bord.

Selon un aspect de l'invention, le dispositif conforme à l'invention pourra comprendre en outre des moyens pour adapter la quantité de lumière du faisceau émise en direction de la zone cible en utilisant la quantité de lumière consigne, par exemple sous la forme d'une luminance.

Ces derniers comprennent, notamment, des combinaisons d'optiques lumineuses, aptes, par exemple, à appliquer une quantité de lumière nominale sur l'ensemble du faisceau sauf dans ladite zone cible, notamment grâce à des moyens permettant de combiner une première composante de faisceau présentant une quantité de lumière nominale sur l'ensemble du faisceau sauf dans ladite zone cible et une quantité de lumière nulle dans ladite zone cible et une seconde composante de faisceau présentant la quantité de lumière consigne sur l'ensemble du faisceau.

Comme évoqué plus haut lesdites optiques comprennent, par exemple, des sources lumineuses orientables, et/ou des écrans mobiles permettant d'obturer de façon variable le ou les faisceaux émis par la ou les sources lumineuses et/ou d'autres dispositifs optiques permettant de modifier le contour du ou des faisceaux émis. Leur état est déterminé par les seconds moyens de traitement.

Il pourra encore s'agir d'optiques comprenant une pluralité de diodes electroluminescentes. La ou les diodes activées sont déterminées par les seconds moyens de traitement.

Le cas échéant, le dispositif peut être agencé pour permettre une modulation en intensité du ou des LEDs.

Le cas échéant, il est possible de prévoir un module à LED, exclusivement dédié ou non exclusivement dédié pour éclairer la zone cible, qui vient en complément d'un autre module, par exemple à lampe à décharge (par exemple de type Xénon) ou à lampe à filament (par exemple lampe halogène), lequel autre module est agencé pour générer le faisceau avec en son sein une zone non éclairée.

## Revendications

1. Procédé de contrôle d'un faisceau lumineux émis par un véhicule, notamment automobile, procédé dans lequel :

   - on détermine des paramètres d'une zone (16), dite cible, occupée par des usagers de la route (18) susceptibles d'être éblouis par le faisceau, les paramètres comprenant la nature des usagers et/ou leur trajectoire et/ou leur localisation par rapport au véhicule,
   - on établit une quantité de lumière, dit seuil d'éblouissement, entrainant un éblouissement des passagers dans ladite zone cible, en fonction desdits paramètres,
   - on détermine une quantité de lumière, dite quantité de lumière consigne, à émettre en direction de la zone cible en fonction desdits paramètres, de façon à maintenir ladite zone cible éclairée, ladite quantité de lumière consigne étant fixée à une valeur inférieure ou égale audit seuil d'éblouissement, la quantité de lumière consigne correspondant à une valeur de l'éclairement (unité Lux) ou à une valeur en intensité (Unité candela), **caractérisé en ce**
   **qu'**on applique la quantité de lumière du faisceau émise en direction de la zone cible en utilisant la quantité de lumière consigne, et qu'on applique une quantité de lumière nominale, supérieure au seuil d'éblouissement, sur l'ensemble du faisceau sauf dans ladite zone cible, en combinant une première composante de faisceau présentant la quantité de lumière nominale sur l'ensemble du faisceau sauf dans ladite zone cible et une quantité de lumière sensiblement nulle dans ladite zone cible et une seconde composante de faisceau présentant la quantité de lumière consigne sur l'ensemble du faisceau.

2. Procédé selon la revendication 1 dans lequel on prévoit des formules de calcul du seuil d'éblouissement en fonction de la localisation desdits usagers, chaque formule correspondant à des natures et des trajectoires données desdits usagers.

3. Procédé selon la revendication 2 dans lequel on établit ledit seuil d'éblouissement selon les étapes successives suivantes :

   - on détermine la nature desdits usagers, et/ou
   - on détermine la trajectoire desdits usagers, et/ou
   - on applique la formule de calcul correspondant à la nature et/ou la trajectoire déterminée.

4. Procédé selon l'une quelconque des revendications précédentes dans lequel on module la quantité de lumière à appliquer dans ladite zone cible pour être perçue de façon sensiblement constante par lesdits usagers de la route.

5. Dispositif de contrôle d'un faisceau lumineux émis par un véhicule, notamment automobile, ledit dispositif comprenant :

   - des moyens pour déterminer des paramètres d'une zone, dite cible, occupée par des usagers de la route susceptibles d'être éblouis par le faisceau, les paramètres comprenant la nature des usagers et/ou leur trajectoire et/ou leur localisation par rapport au véhicule,
- des moyens pour établir une quantité de lumière, dite quantité de lumière consigne, à émettre en direction de la zone cible en fonction desdits paramètres, de façon à maintenir ladite zone cible éclairée, et pour établir une quantité de lumière, dit seuil d'éblouissement, entrainant un éblouissement des passagers dans ladite zone cible, en fonction desdits paramètres, la quantité de lumière consigne étant fixée à une valeur inférieure ou égale audit seuil,

**caractérisé en ce que**

le dispositif comprend des moyens de contrôle d'un faisceau lumineux configurés pour mettre en œuvre un procédé selon l'une des revendications 1 à 4.

6. Dispositif selon la revendication 5 dans lequel les moyens pour déterminer les paramètres de la zone cible comprennent au moins une caméra et des premiers moyens de traitement d'informations relevées par la ou lesdites caméras.

7. Dispositif selon l'une des revendications 5 à 6, **caractérisé par le fait qu'**il comporte un module à LED, exclusivement dédié ou non exclusivement dédié pour éclairer la zone cible, qui vient en complément d'un autre module du dispositif, par exemple à lampe à décharge, par exemple de type Xénon, ou à lampe à filament, par exemple lampe halogène, lequel autre module est agencé pour générer le faisceau avec en son sein une zone non éclairée.

## Patentansprüche

1. Verfahren zur Steuerung eines von einem Fahrzeug, insbesondere einem Kraftfahrzeug, ausgesandten Lichtstrahls, bei welchem Verfahren :

   - werden die Parameter einer als Ziel sogenannte Zone (16) bestimmt, die von Verkehrsteilnehmern (18) eingenommen wird, die durch den Strahl geblendet werden können, wobei die Parameter die Art der Verkehrsteilnehmer und/oder ihre Flugbahn und/oder ihre Lage in Bezug auf das Fahrzeug umfassen,
   - wird eine als Blendschwelle sogenannte Lichtmenge, die eine Blendung der Fahrgäste in der Zielzone verursacht, in Abhängigkeit von diesen Parametern festgelegt,
   - wird in Abhängigkeit von diesen Parametern eine Lichtmenge, die sogenannte Soll-Lichtmenge, bestimmt, die in Richtung der Zielzone ausgestrahlt werden soll, um diese Zielzone beleuchtet zu halten, wobei die Soll-Lichtmenge auf einen Wert eingestellt wird, der kleiner oder gleich der Blendschwelle ist, wobei die Soll-Lichtmenge einem Beleuchtungswert (Einheit Lux) oder einem Intensitätwert (Einheit Candela) entspricht, **dadurch gekennzeichnet, dass** die Lichtmenge des emittierten Strahls mit der eingestellten Lichtmenge in Richtung der Zielzone aufgebracht wird,
   und dass eine nominale Lichtmenge, die größer als die Blendschwelle ist, über den gesamten Strahl mit Ausnahme der Zielzone angelegt wird, indem eine erste Strahlkomponente mit der nominalen Lichtmenge über den gesamten Strahl mit Ausnahme der Zielzone und einer im wesentlichen null Lichtmenge in der Zielzone und eine zweite Strahlkomponente mit der Soll-Lichtmenge über den gesamten Strahl kombiniert wird.

2. Verfahren nach Anspruch 1, bei dem Formeln zur Berechnung der Blendschwelle in Abhängigkeit vom Standort der Benutzer vorgesehen sind, wobei jede Formel den gegebenen Arten und Flugbahnen der Benutzer entspricht.

3. Verfahren nach Anspruch 2, bei dem die Blendschwelle gemäß den folgenden aufeinanderfolgenden Schritten festgelegt wird:

   - die Art der genannten Benutzer bestimmt wird, und/oder
   - die Flugbahn der genannten Benutzer bestimmt wird, und/oder
   - die der Art und/oder der ermittelten Trajektorie entsprechende Berechnungsformel angewendet wird.

4. Verfahren nach einem der vorstehenden Ansprüche, bei dem die in der Zielzone aufzubringende Lichtmenge so moduliert wird, daß sie von den Verkehrsteilnehmern im wesentlichen konstant wahrgenommen wird.

5. Vorrichtung zur Steuerung eines von einem Fahrzeug, insbesondere einem Kraftfahrzeug, ausgesandten Lichtstrahls, wobei diese Vorrichtung umfasst:

   - Mittel zur Bestimmung der Parameter einer Zone, Zielzone genannt, die von Verkehrsteilnehmern eingenommen wird, die durch den Lichtstrahl geblendet werden können, wobei die Parameter die Art der Verkehrsteilnehmer und/oder ihre Flugbahn und/oder ihre Lage in Bezug auf das Fahrzeug umfassen,
- Mittel zum Festlegen einer Lichtmenge, sogenannte Soll-Lichtmenge, und in Abhängigkeit von den genannten Parametern in Richtung der Zielzone ausgestrahlt werden soll, um diese Zielzone beleuchtet zu halten, und zum Festlegen einer Lichtmenge, sogenannte Blendschwelle, und die eine Blendung der Fahrgäste in der Zielzone verursacht, in Abhängigkeit von den genannten Parametern, wobei die Soll-Lichtmenge auf einen Wert eingestellt wird, der kleiner oder gleich der Schwelle ist, **dadurch gekennzeichnet, dass** die Vorrichtung Mittel zur Steuerung eines Lichtstrahls umfasst, die so konfiguriert sind, dass sie einen Prozess nach einem der Ansprüche 1 bis 4 implementieren.

6. Vorrichtung nach Anspruch 5, wobei die Mittel zur Bestimmung der Parameter der Zielzone mindestens eine Kamera und erste Mittel zur Verarbeitung der von der (den) Kamera(s) aufgenommenen Informationen umfassen.

7. Vorrichtung nach einem der Ansprüche 5 bis 6, **dadurch gekennzeichnet, dass** sie ein LED-Modul umfasst, das ausschließlich oder nicht ausschließlich für die Beleuchtung der Zielzone bestimmt ist, das ein anderes Modul der Vorrichtung ergänzt, zum Beispiel eine Entladungslampe, zum Beispiel vom Xenon Typ, oder eine Glühlampe, zum Beispiel eine Halogenlampe, wobei das andere Modul so angeordnet ist, dass es den Strahl mit einer nicht beleuchteten Zone in seinem Inneren erzeugt.

**Claims**

1. Method for controlling a light beam emitted by a vehicle, in particular a motor vehicle, in which :

   - parameters of a zone (16), so-called target, occupied by road users (18) liable to be dazzled by the beam are determined, the parameters comprising the nature of the users and/or their trajectory and/or their location with respect to the vehicle,
   - a quantity of light, so-called glare threshold, causing glare to passengers in said target area is established as a function of said parameters,
   - a quantity of light, so-called set quantity of light, to be emitted towards the target zone is determined as a function of said parameters, so as to keep said target zone illuminated, said set quantity of light being set at a value less than or equal to said glare threshold, the set quantity of light corresponding to a value of illumination (unit Lux) or to a value of intensity (unit candela),
   **characterized in that** the light quantity of the emitted beam is applied in the direction of the target zone using the set quantity of light,
   and that a nominal light quantity, greater than the glare threshold, is applied over the entire beam except in said target zone, by combining a first beam component having the nominal light quantity over the entire beam except in said target zone and a substantially zero light quantity in said target zone and a second beam component having the set quantity of light over the entire beam.

2. Method according to claim 1 in which formulae are provided for calculating the glare threshold as a function of the location of said users, each formula corresponding to given natures and trajectories of said users.

3. Method according to claim 2 in which said glare threshold is established according to the following successive steps:

   - the nature of said users is determined, and/or
   - the trajectory of said users is determined, and/or
   - the calculation formula corresponding to the nature and/or the determined trajectory is applied.

4. Method according to any one of the preceding claims in which the quantity of light to be applied in said target zone is modulated to be perceived in a substantially constant manner by said road users.

5. Device for controlling a light beam emitted by a vehicle, in particular a motor vehicle, said device comprising :

   - means for determining parameters of a zone, so-called target, occupied by road users liable to be dazzled by the beam, the parameters comprising the nature of the users and/or their trajectory and/or their location with respect to the vehicle,
   - means for establishing a quantity of light, so-called set quantity of light, to be emitted in the direction of the

9

target zone as a function of said parameters, so as to keep said target zone illuminated, and for establishing a quantity of light, referred to as the glare threshold, causing glare of passengers in said target zone, as a function of said parameters, the set quantity of light being set at a value less than or equal to said threshold, **characterised in that**
the device comprises means for controlling a light beam configured to implement a process according to one of claims 1 to 4.

6.  Device according to claim 5 wherein the means for determining the parameters of the target zone comprise at least one camera and first means for processing information picked up by said camera(s).

7.  Device according to one of claims 5 to 6, **characterized in that** it comprises an LED module, exclusively dedicated or not exclusively dedicated to illuminate the target zone, which complements another module of the device, for example a discharge lamp, for example of the Xenon type, or a filament lamp, for example a halogen lamp, which other module is arranged to generate the beam with a non-illuminated zone within it.

Fig. 1

Fig. 2

Fig. 3

Fig. 4

Fig. 5

EP 2 479 064 B1

Fig. 6

Fig. 7

**EP 2 479 064 B1**

**RÉFÉRENCES CITÉES DANS LA DESCRIPTION**

**Documents brevets cités dans la description**

- EP 2275305 A

- EP 0869031 A